# EUROPÄISCHE PATENTSCHRIFT

(11) **EP 1 470 694 B1**
(45) Veröffentlichungstag und Bekanntmachung des Hinweises auf die Patenterteilung: **24.07.2013**
(21) Anmeldenummer: 03701465.1
(22) Anmeldetag: 02.01.2003
(51) Int. Cl.: H04M 1/18

(54) **MOBILES KOMMUNIKATIONSENDGERÄT MIT FEUCHTIGKEITSSENSOR**
MOBILE COMMUNICATION TERMINAL WITH HUMIDITY SENSOR
TERMINAL DE COMMUNICATION MOBILE A CAPTEUR D'HUMIDITE

(30) Priorität: 31.01.2002 DE 10203815
(43) Veröffentlichungstag der Anmeldung: 27.10.2004
(73) Patentinhaber: Gigaset Communications GmbH, 81379 München (DE)
(72) Erfinder: BUSCH, Georg, 48683 Ahaus (DE)
(74) Vertreter: Michalski Hüttermann & Partner Patentanwälte
(86) Internationale Anmeldenummer: PCT/DE2003/000002
(87) Internationale Veröffentlichungsnummer: WO 2003/065695

(56) Entgegenhaltungen:
- DE-A- 10 021 797
- DE-U- 20 113 951
- PATENT ABSTRACTS OF JAPAN vol. 011, no. 162 (P-579), 26. Mai 1987 (1987-05-26) & JP 61 294417 A (TOSHIBA CORP), 25. Dezember 1986 (1986-12-25)
- DATABASE WPI Section EI, Week 200228 Derwent Publications Ltd., London, GB; Class W02, AN 2002-223571 XP002239759 & KR 2001 097 682 A (APPEAL TELECOM CO LTD), 8. November 2001 (2001-11-08)
- PATENT ABSTRACTS OF JAPAN vol. 1997, no. 11, 28. November 1997 (1997-11-28) & JP 09 181809 A (KOYAIZU I), 11. Juli 1997 (1997-07-11)
- PATENT ABSTRACTS OF JAPAN vol. 2000, no. 24, 11. Mai 2001 (2001-05-11) & JP 2001 197175 A (OTSUKI S), 19. Juli 2001 (2001-07-19)

## Beschreibung

Die Erfindung betrifft ein mobiles Kommunikationsendgerät gemäß dem Oberbegriff des Anspruchs 1.

Mobile Kommunikationsendgeräte zeigen immer wieder Korrosionserscheinungen im Inneren des Gehäuses an metallischen, elektrisch nicht geschützten Verbindungen und Flächen. Reklamationen der Kunden bezüglich ihres mobilen Kommunikationsendgerätes basieren zu einem großen Teil auf solchen Korrosionserscheinungen.

Die Tastaturflächen sind von den Korrosionserscheinungen insbesondere aber nicht alleine betroffen. Bei Fehlbehandlungen des Kommunikationsendgerätes unter üblichen haushälterischen Bedingungen kommt es häufig im Bereich der Bauteile zu Kurzschlüssen durch Korrosionsprodukte, die nur bei eingeschaltetem Gerät und bei Spannungsdifferenzen in der Größenordnung 1,2 Volt und größer zwischen zwei elektrisch aktiven Potenzialpunkten auftreten, die einen kleineren oder höchstens gleichen Abstand haben als einen solchen Abstand, ab dem überhaupt keine Elektrolyse mehr stattfindet. Die Größenordnung der Spannungsdifferenz hängt letztlich aber von den tatsächlich vorherrschenden Verhältnissen ab. Als Beispiel für eine Fehlbehandlung des Kommunikationsendgerätes unter üblichen haushälterischen Bedingungen sei das Fallenlassen des Kommunikationsendgerätes in einen Wassereimer genannt, dessen Wasser etwas mit einem herkömmlichen Haushaltsreiniger versetzt ist.

Als Beispiel für einen Abstand, bei dessen Überschreiten eine Elektrolyse nicht mehr stattfindet, seien 2 cm genannt.

Insbesondere bei Geräten mit Gummimatten und/oder Folien können unterhalb der Gummimatte bzw. Folie Korrosionserscheinungen an metallischen, nicht geschützten elektrisch leitenden Flächen beobachtet werden.

Gelangt wasserhaltige Flüssigkeit auf eine Baugruppe mit einer Betriebsspannung von größer 1,2 Volt, so wird das Wasser durch eine Elektrolyse stark alkalisch bis zum PH-Wert 14. Die alkalische Flüssigkeit zerstört in kurzer Zeit die Baugruppe durch Korrosion. Verunreinigungen auf der Baugruppe können diesen Vorgang noch beschleunigen. Bei der Verwendung neuerer Lote mit Zinn-Silber-Kupfer wird dieser Vorgang noch beschleunigt. Auch säurehaltige Flüssigkeiten können das Entstehen von Korrosion bewirken.

Um der Korrosion entgegenzuwirken, werden beispielsweise spritzwasserdichte Geräte gefertigt. Aber auch diese Geräte bleiben letztlich nicht von der Korrosion verschont. Auch bei diesen Geräten entsteht Korrosion z. B. an den Kontaktflächen im Tastaturbereich im Lauf der Zeit.

Es ist auch bekannt, durch Aufbringen von Schutzlacken vor dem Zusammenbau der Geräte die Korrosion einzudämmen. Der Nachteil hierbei ist, dass die Reparatur von Baugruppen nur noch eingeschränkt möglich ist. Weiter nachteilig ist, dass die Kontaktstellen der Tastaturen auf diese Weise nicht geschützt werden können, weil sie sonst isoliert und dadurch funktionsuntüchtig sind.

Ferner ist bekannt, Tauchlackierungen einzusetzen, wenn auf keine Kontaktflächen Rücksicht genommen werden muss.

Auch das Vorsehen von Karbon auf den Tastenkontakten und Prüfpunkten ist bekannt, wenn es darum geht, Korrosion im Gerät zu verhindern. Bei einer Vielzahl von Geräten ist aber auf Grund der Packungsdichte der Bauteile ein Korrosionsschutz mit Karbon nicht möglich.

Weiter ist bekannt, Kontaktflächen großzügig flächig auszulegen, um die Wirkung der Korrosion beispielsweise in Form einer Unterbrechung der Kontakte zeitlich hinaus zu zögern. Die Korrosion kann aber insgesamt wenigstens nicht gänzlich auf diese Weise verhindert werden. Ebenso wenig kann ein wachsender Kurzschluss durch Korrosionsprodukte verhindert werden.

Aus der Druckschrift DE 100 21 797 Al ist ein mobiles Kommunikationsendgerät mit einem Feuchtigkeitssensor bekannt, wobei die von Feuchtigkeitssensor gemessenen Werte im Display des Kommunikationsendgeräts angezeigt werden können.

Aus der Druckschrift JP 61294417 A ist eine Stromversorgungskontrollschaltung ausschließlich für ein Display bekannt, die mit Hilfe eines Feuchtigkeitssensors in Abhängigkeit vom Unter- bzw. Überschreiten eines Feuchtigkeitsschwellwertes die Stromversorgung für das Display zu- bzw, abschaltet. Zweck dieser Maßnahme ist, eine elektrolytische Korrosion an den Elektroden des Displays zu verhindern. Die angesprochene Druckschrift offenbart aber beispielsweise nicht, ob die Kontrollschaltung überhaupt prozessorgesteuert ist. Sie könnte ebenso rein widerstandgesteuert sein. Es gibt jedenfalls keinen Hinweis darauf, dass die Kontrollschaltung eine prozessorale Steuerung ist.

Aus DATABASE WPI Section EI, Week 200228 Derwent Publications Ltd., London, GB; Class WO2, AN 2002-223571 XP002239759 & KR 2001 097 682 A (APPEAL TELECOM CO LTD), 8.November 2001 (2001-11-08) ist ein Apparat mit einem Feuchtigkeitssensor zur automatischen Abschaltung der Stromversorgung eines zellularen Telefons, sobald die gemessene Feuchtigkeit einen vorbestimmten Wert überschreitet, bekannt.

Aufgabe der vorliegenden Erfindung ist es, ausgehend von einem mobilen Kommunikationsendgerät der eingangs genannten Art technische Maßnahmen für ein solches mobiles Kommunikationsendgerät anzugeben, durch die Korrosionserscheinungen am oder im mobilen Kommunikationsendgerät stark gehemmt oder sogar gänzlich vermieden sind.

Diese Aufgabe wird erfindungsge-mäß durch ein mobiles Kommunikationsendgerät gelöst, das die Merkmale des Anspruchs 1 aufweist.

Danach sind Feuchtigkeitssensoren am oder im mobilen Kommunikationsendgerät vorgesehen, mit deren Hilfe die im mobilen Kommuriikationsendgerät vorhandene Prozesssteuerung eine im mobilen Kommunikationsendgerät nachhaltig vorhandene Feuchtigkeit erkennt. Die Prozessorsteuerung veranlasst dann als Folge der Feuchtigkeitserkennung eine Voll- bzw. Teilabschaltung von Funktionsteilen des mobilen Kommunikationsendgerätes. Von der Teilabschaltung von Funktionsteilen sind insbesondere solche Funktionsteile betroffen, die von einer Korrosion in erster Linie betroffen sind. Eine andere Möglichkeit wäre, das Gerät insgesamt abzuschalten. In jedem Fall müssen bei einer festgestellten nachhaltig vorhandenen Feuchtigkeit im Gerät vorhandene Spannungsdifferenzen minimiert werden. Die Spannungsdifferenzen müssen wenigstens soweit minimiert werden, dass sie für ein Hervorrufen von Korrosion unerheblich geworden sind.

Durch das beispielsweise Abschalten betreffender Funktionsteile gehen solche Spannungsdifferenzen verloren und es kann auch keine Korrosion mehr durch diese Spannungsdifferenzen entstehen. Ohne eine wenigstens genügend hohe Spannungsdifferenz kann keine Elektrolyse zwischen zwei betreffenden Potenzialpunkten entstehen. Das Gerät bleibt korrosionsfrei. Versuche haben gezeigt, das stromlos getauchte Geräte wochenlang ohne Korrosionsschäden bleiben.

Die für die Feuchtigkeitserkennung verwendeten Feuchtigkeitssensoren können beispielsweise an den Kontaktstellen der Tastatur und, bei Bedarf, zusätzlich an mehreren anderen Stellen im mobilen Kommunikationsendgerät angeordnet sein. Sie können beispielsweise auf einer Leiterplatte des Gerätes angeordnet sein. Es ist grundsätzlich denkbar, dass insgesamt nur ein einziger Feuchtigkeitssensor vorgesehen ist. Dies wird dann zutreffen, wenn aus Platzgründen mehrere Feuchtigkeitssensoren nicht vorsehbar sind.

Die Feuchtigkeitssensoren können gleich einem Tastaturmäander gefertigt sein, so dass sie gleichzeitig mit den Mäandern der Tastatur gefertigt werden können. Auf der Leiterplatte entstehen dadurch keine weiteren Kosten in Bezug auf das Gesamtgerät.

Die Erkennung von Flüssigkeit im mobilen Kommunikationsendgerät selbst wird durch eine Softwareimplementierung innerhalb der Prozessorsteuerung des mobilen Kommunikationsendgerätes bewerkstelligt. Gelangt z. B. Flüssigkeit an einen der Feuchtigkeitssensoren, werden durch die Flüssigkeit abhängig vom Typ des Feuchtigkeitssensors und des zugehörigen Schaltungstyps beispielsweise Frequenzen oder Übergangswiderstände so stark verändert, dass eine Auswertung im vorliegenden Fall durch die Prozessorsteuerung oder auch durch eine andere Steuerung erfolgen kann.

Die Auswertung kann beispielsweise zu einem Eintrag ins Gerätelogbuch führen, so das es auch noch zu einem späteren Zeitpunkt möglich ist, abzuprüfen, ob zu einem früheren Zeitpunkt eine Feuchtigkeitserkennung stattgefunden hat. Dies kann beispielsweise in solchen Fällen interessant sein, in denen sich das mobile Kommunikationsendgerät gerade in einem aktiven Kommunikationsmodus, beispielsweise in der Übertragung oder Empfang einer SMS (Short Messages) oder der Abwicklung eines Kommunikationsgesprächs befindet, während die Feuchtigkeitserkennung Feuchtigkeit im mobilen Kommunikationsendgerät meldet. In diesem Fall ist es vorteilhaft mit einer korrosionshemmenden Maßnahme noch so lange zu warten, bis der aktive Zustand des mobilen Kommunikationsendgerätes beendet ist. Nach der Beendigung des aktiven Zustandes des mobilen Kommunikationsendgerätes kann dann immer noch abgeprüft werden, ob im mobilen Kommunikationsendgerät Feuchtigkeit aufgetreten ist oder nicht, und es kann dann immer noch in entsprechender Weise darauf reagiert werden. Mit den erfindungsgemäßen Maßnahmen werden die Korrosionserscheinungen auf jeden Fall deutlich reduziert.

Vorteilhafte Ausgestaltungen der Erfindung sind Gegenstand von Unteransprüchen.

Danach werden bei einer Teilabschaltung von Funktionsteilen des mobilen Kommunikationsendgerätes wenigstens noch solche Funktionsteile des mobilen Kommunikationsendgerätes aktiv geschaltet gelassen, die für die Feuchtigkeitserkennung und für eine Reaktivierung des Gesamtgerätes nach einer weit genug fortgeschrittenen Trocknung des mobilen Kommunikationsendgerätes wichtig sind.

Vorteilhaft hierbei ist, dass ein selbständiges Wiedereinschalten des Gerätes möglich ist und sich ein Benutzer des mobilen Kommunikationsendgerätes nicht explizit darum kümmern muss, dass das mobile Kommunikationsendgerät wieder eingeschaltet wird.

In einer anderen vorteilhaften Ausgestaltung der Erfindung sind wenigstens die bei einer Feuchtigkeitserkennung aktiv gelassenen Funktionsteile in einer solchen Art und Weise konstruiert bzw. ausgelegt, dass die zwischen zwei vorhandenen elektrisch aktiven Potenzialpunkte mit einem maximal gleichen oder kleineren als für eine Elektrolyse unbedingt notwendigen Abstand vorherrschende Spannungsdifferenz maximal gleich oder kleiner 1,2 Volt ist. Der Vorteil hierbei ist, dass eine Korrosionsverhinderung realisiert ist, ohne betreffende Funktionsteile tatsächlich gänzlich abschalten zu müssen. Je weniger umfangreich das mobile Kommunikationsendgerät abgeschaltet werden muss, um so funktionstüchtiger ist es noch selbst in der korrosionshemmenden Phase.

Je geringer Spannungsdifferenzen sind, um so größer ist die Wahrscheinlichkeit, dass bei einer ansonsten unveränderten Geometrie keine Elektrolyse durch in das mobile Kommunikationsendgerät eindringende Feuchtigkeit in Gang gesetzt wird. Empirische Betrachtungen lassen dabei den Schluss zu, dass in einem ersten Reduzierungsbereich der Reduzierung der vorherrschenden Spannungsdifferenzen die Auswirkungen der Verhinderung von Korrosionserscheinungen am größten und später dann nur noch geringer sind. Es kann daher eine Art Schwellwert für Spannungsdifferenzen in einem bisher üblichen mobilen Kommunikationsendgerät festgelegt werden, hier 0,9/0,8 Volt, unterhalb der eine elektrolytisierende Wirkung praktisch nicht mehr in Erscheinung tritt. Es ist daher möglich, sich auf diesen Schwellwert zu beschränken und das mobile Kommunikationsendgerät wenigstens soweit als möglich unterhalb dieses Schwellwertes zu betreiben.

Wie weiter oben schon erwähnt, ist es vorteilhaft, wenn im mobilen Kommunikationsendgerät das Erkennen von eingedrungener Feuchtigkeit speicherbar ist, weil dann zuerst noch aktive Tätigkeiten des mobilen Kommunikationsendgerätes durch das mobile Kommunikationsendgerät beendet werden können, bevor dann die korrosionshemmenden Maßnahmen aktiviert werden.

In einer weiteren vorteilhaften Ausgestaltung der Erfindung sind beispielsweise Notrufverbindungen und/oder sonstige bewusst gewünschte Verbindungen wenigstens noch grundsätzlich bewerkstelligbar. Dies findet natürlich dort seine Grenzen, wo aus Gründen einer zu weit fortgeschrittenen Zerstörung physikalischer Notwendigkeiten durch die Korrosion solche Verbindungswünsche überhaupt nicht mehr möglich sind.

## Patentansprüche

1. Mobiles Kommunikationsendgerät mit Prozessorsteuerung für eine prozessorale Abwicklung zugehöriger Funktionen und Feuchtigkeitssensor, wobei wenigstens ein einziger durch die Prozessorsteuerung kontrollierter Feuchtigkeitssensor für eine Feuchtigkeitserkennung installiert ist, wobei durch die Prozessorsteuerung bei einer Feuchtigkeitserkennung eine Voll- bzw. Teilabschaltung von Funktionsgruppen des mobilen Kommunikationsendgerätes zu einem vorgegebenen Zeitpunkt bewerkstelligt ist, **dadurch gekennzeichnet, dass** ein Erkennen von Feuchtigkeit im mobilen Kommunikationsendgerät speicherbar ist und dass der vorgegebene Zeitpunkt der Voll- bzw. Teilabschaltung von einer Beendigung eines aktiven Zustands des mobilen Kommunikationsendgerät vorgegeben ist.

2. Mobiles Kommunikationsendgerät nach Anspruch 1, **dadurch gekennzeichnet, dass** bei einer Teilabschaltung des mobilen Kommunikationsendgerätes elektrisch wenigstens noch solche Funktionsteile des mobilen Kommunikationsendgerätes in einem aktiven Zustand gehalten sind, die für die Feuchtigkeitserkennung und für die Reaktivierung des Gesamtgerätes wichtig sind.

3. Mobiles Kommunikationsendgerät nach Anspruch 2, **dadurch gekennzeichnet, dass** wenigstens die bei einer Teilabschaltung des mobilen Kommunikationsendgerätes noch in einem aktiven Zustand gehaltenen Funktionsteile in einer solchen Art und Weise konstruiert bzw. ausgelegt sind, dass eine zwischen zwei elektrisch aktiven Potenzialpunkten mit einem maximal gleichen oder kleineren als für eine Elektrolyse unbedingt notwendigen Abstand vorherrschende Spannungsdifferenz maximal gleich oder kleiner als 1,2 Volt ist.

4. Mobiles Kommunikationsendgerät nach Anspruch 3, **dadurch gekennzeichnet, dass** die Spannungsdifferenz in einem möglichst großen Ausmaß kleiner als 1,2 Volt ist.

5. Mobiles Kommunikationsendgerät nach Anspruch 3 oder 4, **dadurch gekennzeichnet, dass** die Spannungsdifferenz in der Größenordnung von 0,9/0,8-Volt bzw. kleiner realisiert ist.

6. Mobiles Kommunikationsendgerät nach einem der vorherig genannten Ansprüche, **dadurch gekennzeichnet, dass** der vorgegebene Zeitpunkt für die Voll- bzw. Teilabschaltung des mobilen Kommunikationsendgerätes quasi der aktuelle Zeitpunkt einer Feuchtigkeitserkennung ist im Falle, dass von dem vorliegenden mobilen Kommunikationsendgerät gerade keine anderweitige aktive Aktion durchgeführt ist, bzw. dass der vorgegebene Zeitpunkt für die Voll- bzw. Teilabschaltung des mobilen Kommunikationsendgerätes ein möglichst kurzer Zeitpunkt nach Abschluss einer aktiven Aktion durch das mobile Kommunikationsendgerät ist.

7. Mobiles Kommunikationsendgerät nach einem der vorherig genannten Anspruche, **dadurch gekennzeichnet, dass** Notrufverbindungen und/oder sonstige bewusst gewünschte Verbindungen grundsätzlich noch bewerkstelligbar sind.

## Claims

1. Mobile communication terminal having a processor controller for processor handling of associated functions and a moisture sensor, wherein at least a single moisture sensor controlled by the processor controller is installed for the purpose of moisture detection, wherein the processor controller fully or partially disconnects function groups of the mobile communication terminal at a prescribed time in the event of moisture detection, **characterized in that** detection of moisture can be stored in the mobile communication terminal and **in that** the prescribed time of the full or partial disconnection is prescribed by termination of an active state of the mobile communication terminal.

2. Mobile communication terminal according to Claim 1, **characterized in that** in the event of partial disconnection of the mobile communication terminal at least such function portions of the mobile communication terminal as are important for the moisture detection and for the reactivation of the overall appliance are electrically kept in an active state.

3. Mobile communication terminal according to Claim 2, **characterized in that** at least the function portions which are still kept in an active state in the event of partial disconnection of the mobile communication terminal are constructed or designed in a manner such that a voltage difference that prevails between two electrically active potential points at a distance that is no more than the same as or shorter than that which is absolutely necessary for electrolysis is no more than equal to or less than 1.2 volts.

4. Mobile communication terminal according to Claim 3, **characterized in that** the voltage difference is to the greatest possible extent less than 1.2 volts.

5. Mobile communication terminal according to Claim 3 or 4, **characterized in that** the voltage difference is provided in the order of magnitude of 0.9/0.8 volt or less.

6. Mobile communication terminal according to one of the preceding claims, **characterized in that** the prescribed time for the full or partial disconnection of the mobile communication terminal is more or less the current time of moisture detection in the event that the present mobile communication terminal is currently performing no other active action, or **in that** the prescribed time for the full or partial disconnection of the mobile communication terminal is the shortest possible time following conclusion of an active action by the mobile communication terminal.

7. Mobile communication terminal according to one of the preceding claims, **characterized in that** emergency calls and/or other consciously wanted connections can still be made in principle.

## Revendications

1. Dispositif de transmission de communication mobile avec commande de processeur pour un développement avec processeur de fonctions associées et avec capteur d'humidité, au moins un seul capteur d'humidité contrôlé par la commande de processeur étant installé pour une détection d'humidité, moyennant quoi grâce à la commande de processeur, en cas de détection d'humidité, une coupure totale respectivement partielle de groupes de fonctions du dispositif de transmission de communication mobile effectuée à un moment prédéterminé, **caractérisé en ce qu'**une détection d'humidité dans le dispositif de transmission de communication mobile peut être stockée en mémoire et **en ce que** le moment prédéterminé de la coupure totale respectivement partielle est prescrit par achèvement d'un état actif du dispositif de transmission de communication mobile.

2. Dispositif de transmission de communication mobile selon la revendication 1, **caractérisé en ce qu'**en cas de coupure partielle du dispositif de transmission de communication mobile, on maintient électriquement dans un état actif au moins encore de telles parties fonctionnelles du dispositif de transmission de communication mobile, qui sont importantes pour la détection de l'humidité et pour la réactivation du dispositif global.

3. Dispositif de transmission de communication mobile selon la revendication 2, **caractérisé en ce qu'**au moins les parties fonctionnelles encore maintenues dans un état actif lors d'une coupure partielle du dispositif de transmission de communication mobile sont conçues respectivement prévues d'une manière telle, qu'une différence de tension dominante entre deux points de potentiel électriquement actifs avec un écart au maximum égal ou inférieur à ce qui est absolument nécessaire pour une électrolyse, est inférieure ou au maximum égale à 1,2 volts.

4. Dispositif de transmission de communication mobile selon la revendication 3, **caractérisé en ce que** la différence de tension est inférieure à 1,2 volts dans une mesure la plus grande possible.

5. Dispositif de transmission de communication mobile selon la revendication 3 ou 4, **caractérisé en ce que** la différence de tension est réalisée avec un ordre de grandeur de 0,9/0,8 volts respectivement moins.

6. Dispositif de transmission de communication mobile selon l'une des revendications précédentes, **caractérisé en ce que** le moment prédéterminé pour la coupure totale respectivement partielle du dispositif de transmission de communication mobile est quasiment le moment actuel d'une détection d'humidité dans le cas où le présent dispositif de transmission de communication mobile n'est pas en train d'effectuer une autre action active respectivement dans le cas où le moment prédéterminé pour la coupure totale respectivement partielle du dispositif de transmission de communication mobile est un moment le plus court possible après achèvement d'une action active par le dispositif de transmission de communication mobile.

7. Dispositif de transmission de communication mobile selon l'une des revendications précédentes, **caractérisé en ce que** des connexions d'appels d'urgence et/ou d'autres connexions expressément souhaitées peuvent en principe encore être réalisées.
